# EUROPÄISCHE PATENTANMELDUNG

(11) **EP 1 108 508 A2**
(43) Veröffentlichungstag der Anmeldung: **20.06.2001**
(21) Anmeldenummer: 01105965.6
(22) Anmeldetag: 10.03.2001
(51) Int. Cl.: B28D 1/12, B24D 5/12, B23D 61/02

(54) **Segmente für maschinelle Schneid- und Trennwerkzeuge**

(71) Anmelder: didia Diamanttechnik GmbH, 95032 Hof (DE)
(72) Erfinder: Dietel, Karlheinz, 95034 Hof (DE)
(74) Vertreter: Amthor, Manfred W. J.

(57) **Zusammenfassung**

Segmente zur unlösbaren Befestigung an maschinellen Schneid- und Trennwerkzeugen, wie Trennscheiben, Sägeblätter, Gatter, Seilsägen u.ä., geeignet für die Herstellung von Schnitten und Trennschnitten an metallischen nichtmetallischen Stoffen, insbesondere an festen und/oder harten Baustoffen und Baumaterialien, wobei die Segmente (1,2) mit jeweils mindestens zwei, direkt aneinander profilierten, nach außen gerichteten Segmentgiebeln (3,4) deren überwiegend quer zu einer Schnitt- oder Trennfuge kantenartige verjüngte Giebelkonturen (5,6) durch jeweils zwei, Giebelwinkel (α,β) anschließende Giebelflanken (7,8) und (9,10), gebildet sind, wobei die beiden Segmentgiebel (3,4) vollständig aus mindestens zwei differenzierten Schneidstoffschichten (A,B) formatiert sind, derart, dass die äußere, einem Schnitt- oder Trenngut primär zugewandte Schneidstoffschicht (A) härter und/oder grobkörniger ausgebildet ist als die innere, von der Schneidstoffschicht (A) überwiegend umgebenen Schneidstoffschicht (B).

## Beschreibung

Die Erfindung betrifft Segmente zur unlösbaren Befestigung an maschinellen Schneid- und Trennwerkzeugen, wie Trennscheiben, Sägeblätter, Gatter, Seilsägen u.ä., geeignet für die Herstellung von Schnitten und Trennschnitten an metallischen und nichtmetallischen Stoffen, insbesondere an festen und/oder harten Baustoffen und Baumaterialien.

Bekannt sind bereits Schneidscheiben zur Bearbeitung von Stahlbeton, Naturstein o.dgl., bei denen eine Reihe rechteckiger Segmentglieder an einem Stammblatt peripher befestigt ist, wobei die radial äußere Kontur der rechteckigen Segmentglieder als Schneidflächen dient.
/EP 0 679 486 A1; Fig. 14; Spalte 14, Zeile 30 - 55/

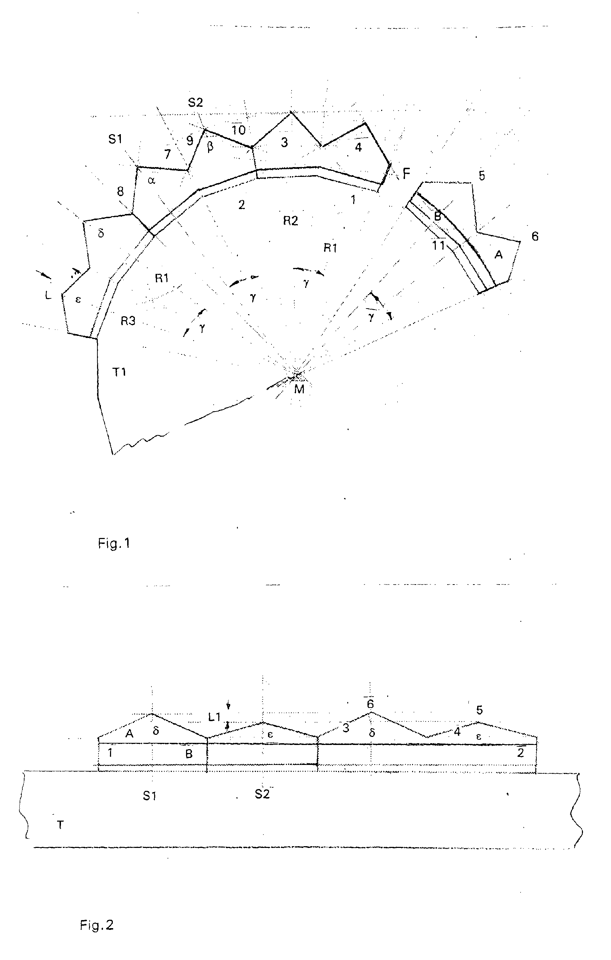

Bekannt sind auch Schleifscheiben mit einer Vielzahl über den Umfang gefugt verteilter, Schleifkörner enthaltende Schleifsegmente, deren periphere Umfangsflächen durch eine konvexe oder konkave Krümmung von einer Kreisform abweichen und je einzelnem Schleifsegment ein oder zwei stirnseitige, quer zur Arbeitsbewegung verlaufende Kanten, aufweisen.
/DE-Gbm 299 11 665; Fig. 2a, 3a/

Den Segmenten dieser vorbezeichneten Schneid- und Schleifscheiben haften zwei wesentliche Nachteile an.

### Erstens:

Die Kanten der rechteckigen Segmente kommen wegen ihrer geometrischen Formsymmetrie bei kreisförmiger Anordnung an einem Systemträger, unabhängig von der Arbeitsbewegung des Werkzeuges, unter unterschiedlichen Winkeln mit dem Schneid- oder Schnittgut zum Eingriff.
Insoweit sind die Kanten rechteckiger Segmente, trotz identischer Rotationshalbmesser, nicht lastsymmetrisch anordenbar.

Bei solcherart kantenartig ausgebildeten Segmenten tritt ferner eine voneinander abweichende Schnittleistung der beiden Segmentkanten eines Segmentes, insbesondere in der Anfangsphase des Schneid- oder Schnittvorganges, auf.
Dadurch ist eine optimale Schnittleistung des Werkzeuges nicht erreichbar, vielmehr Ist dazu eine gleichmäßige Verteilung der Schnittleistung auf jede Segmentkante erforderlich.

### Zweitens:

Die stirnseitigen Kanten der Schneid- und Schleifsegmente sind wegen ihrer geometrisch vorgegebenen Lage an den beiden Segmentenden rechteckiger Segmente betreffs ihrer realisierbaren Größe relativ begrenzt.
Insoweit ist ihr praktischer Einsatz als Arbeitskante im Verlauf der Einsatzzeit des Werkzeuges von sehr kurzer Dauer, d.h., die spezifischen Eigenschaften kantenartig profilierter Oberflächen sind grundsätzlich nicht oder nur unzureichend angelegt.

Bekannt ist ferner ein Schleifkörpersegment für vorzugsweise superharte Schneidstoffe, deren gerade verlaufende Eingriffskanten über mehrere Eingriffsebenen geneigt verlaufen.
Die Profilierung des Schleifkörpersegmentes in Hauptschneidfläche, geneigte Rückfläche, zwei geneigte Seitenflächen und negativ geneigte Nebenschneidenflächen, beschränkt ihre Anwendung allerdings auf Umfangsschleifarten spezifischer Oberflächen.
Eine Anwendung als Schneid- und Trennwerkzeug für Baustoffe und Baumaterialien kommt deshalb nicht in Betracht.
/DD 293 300; Fig. 1 - 3/

Bekannt ist schließlich auch ein einstückiges Schleifwerkzeug zum Profilschleifen, wie etwa zur Formgebung und Oberflächenbearbeitung metallischer Werkstücke, wobei mit Schneidmittel belegte Zahnprofile auch für das Wälzschleifverfahren von Zahnrädern geeignet sind.

Derartige einstückige Schleifwerkzeuge zur Formgebung und Oberflächenbearbeitung sind jedoch zur Herstellung von Schnitten und Trennschnitten an metallischen und nichtmetallischen Stoffen, insbesondere an Baustoffen und Baumaterialien, ebenfalls völlig untauglich.
/DE 39 37 180; Fig. 1 - 5/

Aufgabe der Erfindung ist deshalb die Schaffung von Segmenten für Schneid- und Trennwerkzeuge, die durch eine kantenartige verjüngte, periphere Doppelgiebelkontur, sowie eine querschnittsabhängige Verteilung differenzierter Schneidstoffmittel im Segment, sowohl eine Erhöhung einer temporär verfügbaren spezifischen Schneid- und Trennleistung, wie insbesondere auch eine variable Veränderung der spezifischen Schneid- und Trennleistung während der Einsatzdauer des Werkzeuges, ermöglichen.

Erfindungsgemäß wird die Aufgabe durch die in den Patentansprüchen 1 bis 17 bezeichneten technischen Mittel gelöst.
Der Kern der Erfindung ist durch die unabhängigen Patentansprüche 1 und 16 gekennzeichnet.
Die Erfindung ist nachstehend näher erläutert.
In der dazugehörigen Zeichnung, die lediglich Ausführungsbeispiele darstellt, zeigen:
Fig. 1: Segmente auf einem scheibenförmigen Systemträger
Fig. 2: Segmente auf einem translatorisch bewegten Systemträger

Die Segmente 1 und 2 sind in bekannter Weise auf den Systemtägern T und T1 fest und unlösbar, beispielsweise durch Laserschweißen, verbunden.
Die Innenkontur der Segmente und die damit korrespondierende Außenkontur der Systemträger T und T1 ist dabei beliebig; sie können gekrümmt, gerade oder polygon ausgebildet sein.

Jedes der Segmente 1 und 2 besteht aus mindestens zwei Segmentgiebeln 3,4, deren kantenartig verjüngte Giebelkonturen 5,6 gegen ein übliches, nicht dargestelltes Schneid- oder Schnittgut, gerichtet sind.
Die Segmentgiebel 3,4 sind dabei jeweils symmetrisch über der Segmentlänge verteilt angeordnet, derart, dass die Giebelflanken 8 und 10 die beiden stirnseitigen Enden des Segmentes 2 markieren, hingegen der Schnittpunkt der beiden Giebelflanken 7,9 die Länge des Segmentes 2 halbiert.
Durch diese zunächst äußerst formsymmetrische Verteilung der Belastung der Segmentprofile ist eine wesentliche Voraussetzung für einen gleichmäßigen und ruhigen Betrieb des Werkzeuges, im Gegensatz zu den bekannten Lösungen des Standes der Technik kantenartiger Segmentprofile und ihrer Position an einem kreisförmigen Systemträger, geschaffen.
In Fortsetzung dieser Merkmale sind die Giebelflanken 7,8,9 und 10 der Segmentgiebel 3,4 durch gleiche, oder zumindest paarweise gleiche, Giebellängen gebildet, die die Giebelwinkel α, β einschließen, wobei die Winkelhalbierenden S1,S2 geneigt unter einem Bogenwinkel γ verlaufen.
Ferner weisen die Segmentgiebel 3,4 gleichen Abstand von einem translatorisch bewegtem Systemträger T, oder identische Rotationshalbmesser R1,R2 eines kreisförmigen Systemträgers T1, auf.
Damit ist jeder der Segmentgiebel 3,4 ständig unter gleichem Eingriffswinkel in einem Schneid- oder Schnittgut, auch unabhängig von der Bewegungsrichtung des Systemträgers T1, belastet.

Um die spezifische Schneid- und Trennleistung bei kantenförmigen Segmentaußenkonturen, insbesondere auch bei kreisförmigen Systemträgern analog T1, wesentlich zu verbessern, sind erfindungsgemäß zwei Maßnahmen vorgeschlagen, die, jeweils einzeln oder gemeinsam gemäß den unabhängigen Patentansprüchen 1 und 16, der Lösung der gleichen Aufgabe dienen:

### Erstens:

Zusätzlich zur Doppelgiebelkontur der Segmente 1,2 ist dem mit einer kristallinen Schneidstoffschicht A üblicher Art formatierten Segmentgiebeln 3,4 eine zweite Schneidstoffschicht B nachgeordnet, die erst nach Verschleiß der Schneidstoffschicht B zum Einsatz kommt.

Damit ist es möglich, nach Minderung oder verschleißbedingtem Verlust der relativ hohen spezifischen Schneid- und Trennleistung, die scharfkantigen peripheren Lagerungen der kristallinen Schneidstoffschicht A an sich bekanntlich zugeordnet ist, den Einsatz des Werkzeuges mit geänderter momentaner Schneidleistungskennlinie fortzusetzen.

### Zweitens:

Sowohl selbständig, wie korrespondierend mit dem vorgenanntem ersten Merkmal, weisen die Segmentgiebel 3,4 eine um die Abstände L oder L1 differenzierte Position auf, derart, dass der beispielsweise zurückgesetzte Segmentgiebel des Rotationshalbmessers R3 und des Giebelwinkels ε erst nach entsprechender Abnutzung oder völligem Verschleiß des korrespondierenden Segmentgiebels des Rotationshalbmessers R1 und des Giebelwinkels δ zum Eingriff kommt.

Mit diesen beiden vorgenannten Merkmalen ist ein praktisch überaus wesentlicher Eingriff in die temporäre Anlage des Leistungskennfeldes segmentierter Schneid- und Trennwerkzeuge möglich.

Die erfindungsgemäße Ausbildung von Segmenten lässt schließlich eine ganze Reihe günstiger Ausgestaltungen und Kombinationen zu.
So ist durch die Vielzahl und Dichte der in Reihe angeordneten Segmentgiebel 3,4 sowohl eine fugenlos unbeabstandete Anordnung der Segmente 1,2, wie auch eine durch Fugen 11 beabstandete Anordnung, fakultativ möglich.
Ebenso ist durch die Anwendung verschiedener Längen und Neigungen der Giebelflanken 7,8,9,10 eine je nach Einsatzzweck des Werkzeuges variabel anpassbare Leistungskennlinie erzielbar.
Eine beliebig gemischte Anordnung solcherart differenzierter Segmente 1,2 eröffnet zusätzliche Möglichkeiten einer flexiblen Werkzeugauswahl.

Von weiterer praktischer Bedeutung ist die durch die Verwendung steilgiebliger, dicht gereihter Segmente, aufwandsfreie Verfügbarkeit des Kernschutzes eines kreisförmigen Systemträgers T1 gemäß Patentanspruch 15.
Auch weitere, hier ungenannte Ausführungsvarianten, gehören ebenso zum Anspruchsbegehren, solange sie das offenbarte Wesen der Erfindung nicht verlassen.

### Verzeichnis der Bezugszeichen

- 1: Segment
- 2: Segment
- 3: Segmentgiebel
- 4: Segmentgiebel
- 5: kantenartig verjüngte Giebelkontur
- 6: kantenartig verjüngte Giebelkontur
- 7: Giebelflanke
- 8: Giebelflanke
- 9: Giebelflanke
- 10: Giebelflanke
- α: Giebelwinkel
- β: Giebelwinkel
- δ: Giebelwinkel
- ε: Giebelwinkel
- A: Schneidstoffschicht
- B: Schneidstoffschicht
- T: Systemträger
- T1: Systemträger
- R1: Rotationshalbmesser
- R2: Rotationshalbmesser
- R3: Rotationshalbmesser
- S1: Winkelhalbierende
- S2: Winkelhalbierende
- γ: Bogenwinkel
- L: Abstand
- L1: Abstand
- F: Segmentfuge
- 11: Fußzone
- M: Rotationsmittelpunkt

## Patentansprüche

1. Segmente zur unlösbaren Befestigung an maschinellen Schneid- und Trennwerkzeugen, wie Trennscheiben, Sägeblätter, Gatter, Seilsägen u.ä., geeignet für die Herstellung von Schnitten und Trennschnitten an metallischen und nichtmetallischen Stoffen, insbesondere an festen und/oder harten Baustoffen und Baumaterialien, **gekennzeichnet durch** Segmente (1,2) mit jeweils mindestens zwei, direkt aneinander profilierten, nach außen gerichteten Segmentgiebeln (3,4), deren überwiegend quer zu einer Schnitt- oder Trennfuge kantenartig verjüngte Giebelkonturen (5,6) durch jeweils zwei, Giebelwinkel (α,β) einschließende Giebelflanken (7,8) und (9,10), gebildet sind, wobei die beiden Segmehtgiebel (3,4) vollständig aus mindestens zwei differenzierten Schneidstoffschichten (A,B) formatiert sind, derart, dass die äußere, einem Schnitt- oder Trenngut primär zugewandte Schneidstoffschicht (A) härter und/oder grobkörniger ausgebildet ist als die innere, von der Schneidstoffschicht (A) überwiegend umgebenen Schneidstoffschicht (B).

2. Segmente nach Patentanspruch 1, dadurch gekennzeichnet, dass ein Systemträger (T) der Segmente (1,2) eine überwiegend translatorische Arbeitsbewegung ausführt.

3. Segmente nach Patentanspruch 1, dadurch gekennzeichnet, dass ein Systemträger (T1) der Segmente (1,2) eine überwiegend rotationsförmige Arbeitsbewegung ausführt.

4. Segmente nach den Patentansprüchen 1 und 3, **dadurch gekennzeichnet,** dass die Segmentgiebel (3,4) der Segmente (1,2) gleiche Rotationsalbmesser (R1,R2) um einen gemeinsamen Rotationsmittelpunkt (M) aufweisen, wobei die Segmentgiebel (3,4) durch jeweils zwei, unter den Giebelwinkeln (α) und (β) verlaufender Giebelflanken (7,8) und (9,10), gebildet sind, und wobei die Winkelhalbierenden (S1,S2) der Giebelwinkel (α) und (β) zweier benachbarter Segmentgiebel (3,4) unter einem Bogenwinkel (y) geneigt zueinander verlaufen.

5. Segmente nach den Patentansprüchen 1 und 2, **dadurch gekennzeichnet,** dass die Winkelhalbierenden (S1,S2) der Giebelwinkel (α,β) der Segmentgiebel (3,4) parallel zueinander verlaufen.

6. Segmente nach den Patentansprüchen 1 und 3, **dadurch gekennzeichnet,** dass die Segmentgiebel (3,4) eines der Segmente (1,2) ungleiche Rotationshalbmesser (R1,R3) um einen gemeinsamen Rotationsmittelpunkt (M) aufweisen, wobei die Segmentgiebel (3,4) durch jeweils zwei, unter den Giebelwinkeln (α) und (β) verlaufender Giebelflanken (7,8) und (9,10) gebildet sind und wobei die Winkelhalbierenden (S1,S2) der Giebelwinkel (δ) und (ε) zweier benachbarter Segmentgiebel (3,4) unter einem Bogenwinkel (y) geneigt zueinander verlaufen.

7. Segmente nach den Patentansprüchen 1, 2 und 5, **dadurch gekennzeichnet,** dass die Segmentgiebel (3,4) von einem überwiegend translatorisch bewegten Systemträger (T) identischen Abstand aufweisen.

8. Segmente nach den Patentansprüchen 1, 2 und 5, **dadurch gekennzeichnet,** dass die Segmentgiebel (3,4) von einem überwiegend translatorisch bewegten Systemträger (T) einen um den Betrag (L1) differenzierten Abstand aufweisen.

9. Segmente nach Patentansprüchen 1 bis 8, **dadurch gekennzeichnet,** dass die Giebelflanken (7,8) und (9,10) gleiche Längen aufweisen.

10. Segmente nach den Patentansprüchen 1 bis 8, **dadurch gekennzeichnet,** dass die Giebelflanken (7,8) und (9,10) ungleiche Längen aufweisen.

11. Segmente nach den Patentansprüchen 1 bis 10, **dadurch gekennzeichnet,** dass die radial inneren Konturen der Segmente (1,2) bogenförmig gekrümmt ausgebildet sind.

12. Segmente nach den Patentansprüchen 1 bis 10, **dadurch gekennzeichnet,** dass die radial inneren Konturen der Segmente (1,2) durch eine Gerade oder, durch mehrere polygon verlaufende Geraden gebildet sind.

13. Segmente nach den Patentansprüchen 1 bis 12, **dadurch gekennzeichnet,** dass eine Reihe von Segmenten (1,2) an Systemträgern (T,T1) durch jeweils eine Segmentfuge (F) untereinander beabstandet befestigt ist.

14. Segmente nach den Patentansprüchen 1 bis 12, **dadurch gekennzeichnet,** dass eine Reihe von Segmenten (1,2) an Systemträgern (T,T1) untereinander unbeabstandet befestigt ist.

15. Segmente nach den Patentansprüchen 1, 3, 4, 6 und 9 bis 14, **dadurch gekennzeichnet,** dass zwischen den radial inneren Konturen der Segmente (1,2) und einem Systemträger (T1) eine über die Dicke des Systemträgers (T1) beidseitig überständige Fußzone (11) vorgesehen ist, deren radial innerer Bereich innerhalb der größten radialen Ausdehnung des Systemträgers (T1) verläuft.

16. Segmente zur unlösbaren Befestigung an maschinellen Schneid- und Trennwerkzeugen, wie Trennscheiben, Sägeblätter, Gatter, Seilsägen u.ä., geeignet für die Herstellung von Schnitten und Trennschnitten an metallischen und nichtmetallischen Stoffen, insbesondere an festen und/oder harten Baustoffen und Baumaterialien, **gekennzeichnet durch** Segmente (1,2) mit mindestens zwei, direkt aneinander angeordneten , nach außen gerichteten Segmentgiebeln (3,4), deren überwiegend quer zu einer Schnitt- oder Trennfuge kantenartig verjüngte Giebelkonturen (5,6) durch jeweils zwei, Giebelwinkel (α und β) einschliessende Giebelflanken (7,8) und (9,10), gebildet sind, wobei die kantenartig verjüngten Giebelkonturen (5,6) der Segmentgiebel (3,4) zu den Systemträgern (T,T1) einen um die Betrag (L) oder (L1) differenzierten Abstand aufweisen.

17. Segmente nach Patentanspruch 16, **gekennzeichnet** durch die kennzeichnenden Merkmale der Patentansprüche 2 bis 15.
